Europäisches Patentamt

European Patent Office

Office européen des brevets

(19)

(11) Veröffentlichungsnummer : **0 438 438 B1**

(12) **EUROPÄISCHE PATENTSCHRIFT**

(45) Veröffentlichungstag der Patentschrift :
**16.12.92 Patentblatt 92/51**

(21) Anmeldenummer : **89911053.0**

(22) Anmeldetag : **30.09.89**

(86) Internationale Anmeldenummer :
**PCT/EP89/01152**

(87) Internationale Veröffentlichungsnummer :
**WO 90/03910 19.04.90 Gazette 90/09**

(51) Int. Cl.⁵ : **B62D 7/14,** B62D 5/04

(54) **EINRICHTUNG ZUM LENKEN DER HINTERRÄDER VON FAHRZEUGEN MIT LENKBAREN VORDER- UND HINTERRÄDERN.**

(30) Priorität : **12.10.88 DE 3834692**

(43) Veröffentlichungstag der Anmeldung :
**31.07.91 Patentblatt 91/31**

(45) Bekanntmachung des Hinweises auf die
Patenterteilung :
**16.12.92 Patentblatt 92/51**

(84) Benannte Vertragsstaaten :
**DE FR GB IT SE**

(56) Entgegenhaltungen :
**EP-A- 0 243 180**
**EP-A- 0 292 567**

(73) Patentinhaber : **ZF FRIEDRICHSHAFEN**
**Aktiengesellschaft**
**Löwentaler Strasse 100 Postfach 2520**
**W-7990 Friedrichshafen 1 (DE)**

(72) Erfinder : **LANG, Armin**
**Rheinstra e 10**
**W-7070 Schwäbisch Gmünd (DE)**
Erfinder : **KNÖDLER, Helmut**
**Elsternweg 6**
**W-7073 Lorch (DE)**
Erfinder : **BRENNER, Peter**
**Eichenstra e 6**
**W-7074 Mögglingen (DE)**

EP 0 438 438 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zum Lenken der Hinterräder von Fahrzeugen mit lenkbaren Vorder- und Hinterrädern. Die elektrischen Signale eines Vorderrad-Lenkwinkelsensors, eines Hinterrad-Lenkwinkelsensors und eines Fahrzustandssensors, beispielsweise eines Fahrgeschwindigkeitssensors, werden einer elektronischen Steuereinheit zugeführt. Dort werden sie zur Betätigung eines Elektromotors des Hinterrad-Lenksystems aufbereitet. Durch eine Feststelleinrichtung kann das Hinterrad-Lenksystem beim Auftreten eines Fehlers blockiert werden. Eine derartige Lenkeinrichtung ist bekannt aus der EP 243 180 A2.

Bei der bekannten Lenkeinrichtung kann eine Fehlsteuerung des Gleichstrommotors zu einem schnellen größeren Lenkfehler führen, bevor durch die Rückmeldung des Hinterrad-Lenkwinkels diese fehlerhafte Lenkbewegung korrigiert oder durch die Feststelleinrichtung beendet werden kann.

Der vorliegenden Erfindung liegt die Aufgabe zugrunde, die Sicherheit der bekannten Lenkeinrichtung weiter zu verbessern. Insbesondere soll eine sehr feine Bewegungsauflösung der lenkbaren Hinterräder ermöglicht werden. Dies bedeutet, daß kleinste Bewegungen der lenkbaren Hinterräder mit größtmöglicher Genauigkeit durchführbar sein sollen.

Diese Aufgabe wird durch die im Anspruch 1 gekennzeichnete Lenkeinrichtung gelöst. Zweckmäßige und vorteilhafte Ausgestaltungen sind in den Unteransprüchen angegeben.

Die Lösung der Aufgabe besteht vor allem darin, daß der Elektromotor als Drehfeldmotor mit einem Rotorlagegeber ausgebildet ist. Im Gegensatz zu einem Gleichstrommotor bleibt ein Drehfeldmotor bei einem Fehler in der Leistungsstufe sofort stehen. Außerdem sind mit einem Drehfeldmotor kleinste Bewegungen sehr genau zu steuern.

Der Drehfeldmotor wird deshalb schrittweise durch Ansteuerimpulse für Rechts- bzw. Linksdrehung von der zentralen Steuereinheit gesteuert. Dabei wird die Bewegung der Schubstange mit Hilfe des Rotorlagegebers schrittweise an die zentrale Steuereinheit zurückgemeldet und quittiert. Bei fehlerhafter Rückmeldung, wie Ausbleiben der Rückmeldesignale oder Auftreten von Rückmeldesignalen ohne vorhergegangene Ansteuerimpulse, wird die Feststelleinrichtung in ihre Blockierstellung geschaltet. Bei einem Fahrzustand mit niedrigen Fahrgeschwindigkeiten werden bei fehlerhaften Rückmeldesignalen von der zentralen Steuereinheit Korrektursignale an eine Einheit für die Motorsteuerlogik ausgegeben. Danach wird erst bei Überschreiten einer -bestimmten Fehlertoleranz die Feststelleinrichtung in ihre Blockierstellung geschaltet. Bei einem anderen Fahrzustand, nämlich bei hohen Fahrgeschwindigkeiten, wird bei fehlerhaften Rückmeldesignalen die Feststelleinrichtung sofort in ihre Blockierstellung geschaltet. In allen Fahrzuständen ist es zweckmäßig, daß ein Freigabesignal von der zentralen Steuereinheit über eine Leitung zu der Einheit für die Motorsteuerlogik vorgesehen ist. Das Freigabesignal aktiviert nur bei fehlerfreiem Betrieb die Leistungsstufe. Fehlt das Freigabesignal, so wird die Leistungsstufe abgeschaltet. Fehlstellungen der lenkbaren Hinterräder werden durch diese Einrichtung auf einen kleinsten, ungefährlichen Wert beschränkt. Die Blockierung der Lenkbewegung der Hinterräder erfolgt bei hohen Fahrgeschwindigkeiten sofort, während bei niedrigen Fahrgeschwindigkeiten Korrekturversuche vorgesehen sind, so daß stets eine gute Sicherheit gewährleistet ist.

Zur Unterstützung der Sicherheit und Genauigkeit der elektronischen Einrichtungen ist es bei der erfindungsgemäßen Lenkvorrichtung zweckmäßig, wenn das Hinterrad-Lenksystem ein Kugelumlauf-Getriebe enthält. Durch ein solches Getriebe ist eine sehr starre und genau bewegbare mechanische Ausführung des Hinterrad-Lenksystems möglich. Dazu wird die Mutter in axialer Richtung durch Präzisionslager spielfrei eingestellt. Die Kugelumlaufeinrichtung, die die Drehbewegung des Drehfeldmotors in eine Längsbewegung der Schubstange umsetzt, wird durch besonders ausgewählte Kugeln vorgespannt. Dadurch läßt sich eine absolute Spielfreiheit verwirklichen.

Im folgenden wird die Erfindung anhand eines in der Zeichnung dargestellten Ausführungsbeispieles naher erläutert. Es zeigen:

Fig. 1 den prinzipiellen Aufbau der erfindungsgemäßen Einrichtung;

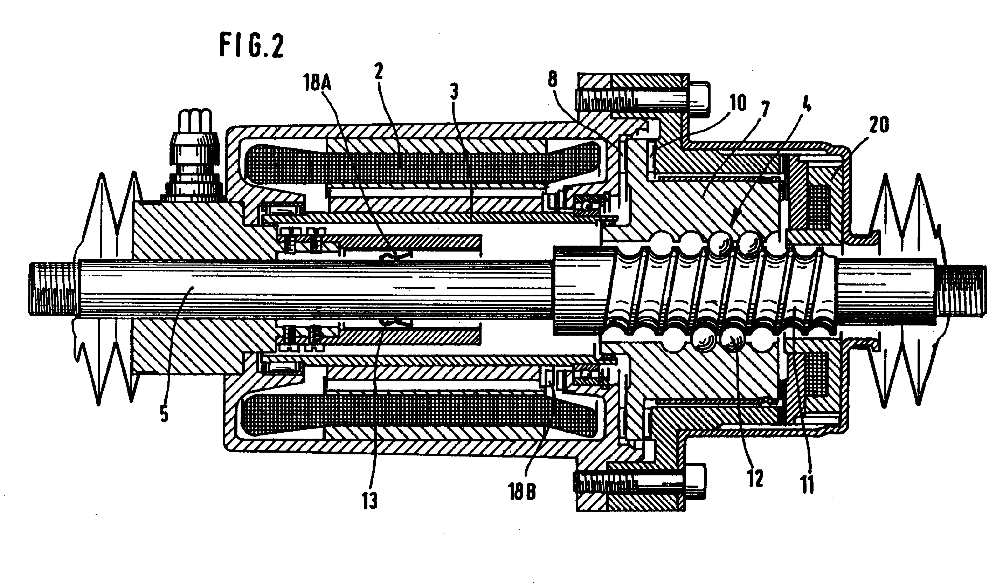

Fig. 2 einen Längsschnitt durch den mechanischen Teil des Hinterrad-Lenksystems.

Ein Hinterrad-Lenksystem 1 wird durch einen als Drehfeldmotor 2 ausgebildeten Elektromotor angetrieben. Die Drehbewegung einer Abtriebswelle 3 des Drehfeldmotors 2 wird durch eine Kugelumlaufeinrichtung 4 in eine Translationsbewegung einer Schubstange 5 umgewandelt. Die Schubstange 5 ist mit Hinterrädern 6 zu deren Verstellung verbunden.

Die Kugelumlaufeinrichtung 4 enthält eine Mutter 7, die mit der Abtriebswelle 3 des Drehfeldmotors 2 drehfest verbunden ist. Die Mutter 7 ist über zwei Axiallager 8 und 10 in axialer Richtung spielfrei gehalten. Eine Schnecke 11 ist mit der Schubstange 5 fest verbunden und zusammen mit dieser verdrehfrei in axialer Richtung verschiebbar. Die Verschiebung der Schnecke 11 erfolgt über eine Kugelreihe 12, deren Kugeln unter Vorspannung zwischen der Mutter 7 und der Schnecke 11 eingefüllt sind. Dadurch wird eine absolute Spielfreiheit der Kugelumlaufeinrichtung 4 erreicht.

An dem Hinterrad-Lenksystem 1 ist ein erster Schubstangenweg-Sensor 13 angeordnet, dessen Signale über eine Signalleitung 14 einer zentralen elektronischen Steuereinheit 15 zugeführt werden. Der zentralen Steuereinheit 15 werden außerdem Signale eines Vorderrad-Lenkwinkelsensors 16 und eines Fahrgeschwindigkeitssensors 17 sowie eventueller weiterer Sensoren für den Fahrzustand des Fahrzeuges zugeführt. Diese elektrischen Signale werden in der zentralen Steuereinheit 15 aufbereitet und für die Ansteuerung des Drehfeldmotors 2 verwendet. Dem ersten Schubstangenweg-Sensor 13 ist ein zweiter Sensor 18 zur Messung der Stellung der Hinterräder 6 parallelgeschaltet, der aus zwei Teilen besteht: Ein Lagegeber 18A steht mit der Schubstange 5 in Verbindung und dient mit seinen Signalen zur Grobmessung der Bewegung der Schubstange 5. Ein Rotorlagegeber 18B steht mit der Abtriebswelle 3 des Drehfeldmotors 2 in Verbindung, mißt die Winkelstellung der Abtriebswelle 3 und dient damit zur Feinmessung der Schubstangenbewegung. Eine Unterteilung des zweiten Sensors 18 ist erforderlich, um eine sehr feine Messung und Steuerung der Bewegung der Hinterräder 6 zu ermöglichen. Durch den Rotorlagegeber 18B ist die sehr feine Messung möglich. Da die Abtriebswelle 3 des Drehfeldmotors 2 jedoch mehrere Umdrehungen ausführt, ist zur genauen Bestimmung der jeweiligen Winkellage der Abtriebswelle 3 und der Stellung der Schubstange 5 eine Grobmessung an der Schubstange 5 durch den Lagegeber 18A erforderlich.

Zu dem Hinterrad-Lenksystem 1 gehört eine Feststelleinrichtung 20, die von der zentralen elektronischen Steuereinheit 15 über eine Steuerleitung 21 gesteuert wird. Die Feststelleinrichtung 20 wirkt als Sicherheitsbremse und ist mit zwei Magnetkreisen ausgestattet. Ein Dauermagnet schließt die Bremse in stromlosem Zustand, ein Elektromagnet öffnet die Bremse.

Von dem Lagegeber 18A und dem Rotorlagegeber 18B führen Signalleitungen 22 bzw. 23 zu einer Einheit 24 zur Sensorauswertung. Von der Einheit 24 führt eine Signalleitung 25 zu der zentralen elektronischen Steuereinheit 15.

Zwei Signalleitungen 26 und 27 führen von der zentralen Steuereinheit 15 zu einer Einheit 28 für die Lagesteuerung des Drehfeldmotors 2. Die Einheit 28 ist über eine Einheit 30 für die Motorsteuerlogik mit einer Leistungsstufe 31 verbunden, von der der Drehfeldmotor 2 über eine Leitung 32 mit Strom versorgt wird.

Die Einheit 30 für die Motorsteuerlogik ist über eine Leitung 33 zur Statusrückmeldung mit der zentralen Steuereinheit 15 verbunden. Eine weitere Leitung 34 führt von der zentralen Steuereinheit 15 zu der Einheit 30 zur Abschaltung der Leistungsstufe 31.

Die Einheiten 24, 28 und 30 und die Leistungsstufe 31 bilden zusammen eine zweite elektronische Steuereinheit 35.

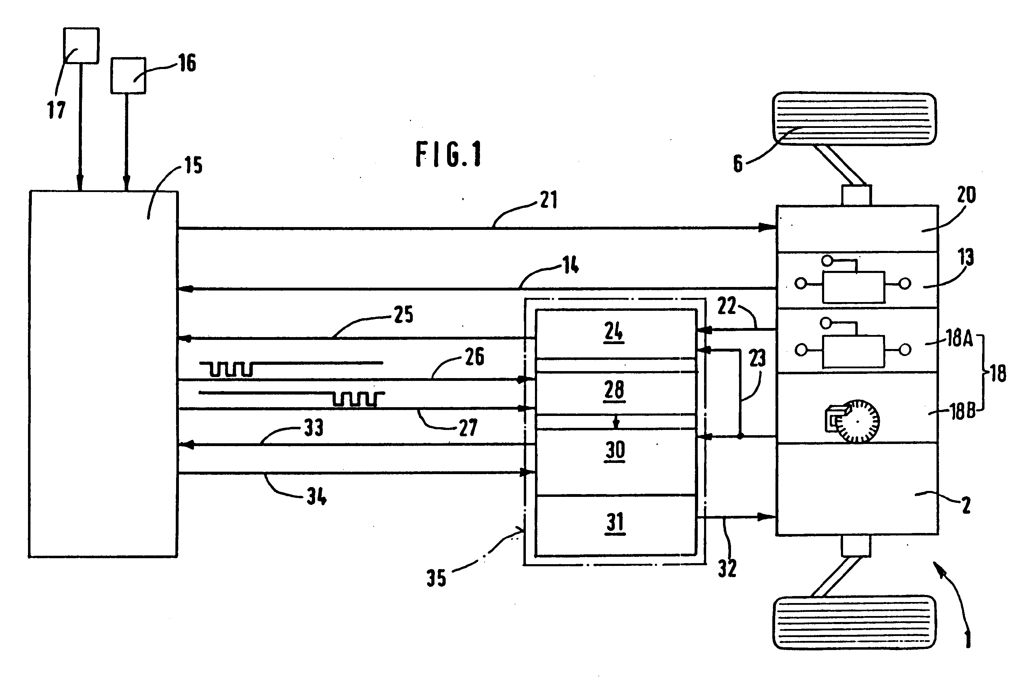

Im folgenden wird die Funktion der erfindungsgemäßen Einrichtung anhand der Fig. 1 näher erläutert.

Von der zentralen elektronischen Steuereinheit 15 werden Befehlssignale über die Signalleitungen 26 bzw. 27 an die zweite elektronische Steuereinheit 35 gegeben, die in einer bestimmten Abhängigkeit von den Signalen des Vorderrad-Lenkwinkelsensors 16 und des Fahrgeschwindigkeitssensors 17 sowie gegebenenfalls weiterer Sensoren für den Fahrzustand des Fahrzeugs stehen. Durch diese Befehlssignale wird erreicht, daß die Hinterräder 6 in einem bestimmten Verhältnis zur Lenkbewegung der nicht dargestellten Vorderräder verstellt werden. Die Befehlssignale werden für kleinste Lenkschritte in den beiden Signalleitungen 26 bzw. 27 für eine Bewegung der Hinterräder 6 nach rechts bzw. nach links durchgegeben. Die Befehlssignale werden in der Einheit 28 für die Lagesteuerung aufgenommen und über die Einheit 30 für die Motorsteuerlogik der Leistungsstufe 31 zugeführt, die den Drehfeldmotor 2 entsprechend antreibt. Pro Impuls auf den Signalleitungen 26 bzw. 27 führt dabei der Drehfeldmotor 2 einen ganz bestimmten rechts- bzw. linksdrehenden Bewegungschritt durch, der sofort von dem Rotorlagegeber 18B und dem Lagegeber 18A an die Einheit 24 zur Sensorauswertung und von dort an die zentrale elektronische Steuereinheit 15 zurückgemeldet wird. Dort wird die Bewegung der Hinterräder 6 schrittweise mit dem vorgegebenen Soll-Wert verglichen.

In der zentralen Steuereinheit 15 ist ein Algorithmus vorgesehen, der bei fehlerhafter Bewegungsrückmeldung den Drehfeldmotor 2 entsprechend dem Fahrzustand (Fahrgeschwindigkeit, Lenkwinkel usw.) entweder sofort über die Leitung 34 abschaltet und die Feststelleinrichtung 20 aktiviert oder ein oder mehrere Korrekturimpulse nachschiebt.

Durch die Verwendung eines Drehfeldmotors für den Antrieb des Hinterrad-Lenksystems 1 werden Fehlstellungen der Hinterräder 6 dadurch vermieden, daß der Drehfeldmotor 2 in einem Störungsfall der Leistungsstufe 31 sich maximal um einen Phasenwinkel drehen kann, und dann automatisch stehenbleibt. Ein kontinuierliches Durchdrehen wie bei einem Gleichstrommotor ist nicht möglich.

Eine zusätzliche Sicherung gegen eine Fehlsteuerung der Hinterräder 6 wird in folgendem Fall erreicht: Werden die Hinterräder 6 durch die Schubstange 5 infolge einer Fehlsteuerung verstellt, ohne daß die Vorderräder verstellt worden sind, so wird auch in diesem Fall bereits der kleinste Lenkschritt, der einem Bit entspricht, an die zentrale elektronische Steuereinheit 15 gemeldet. Da dort kein Befehlssignal gespeichert ist, wird über die Steuerleitung 21 sofort die Feststelleinrichtung 20 in ihre Blockierstellung geschaltet. Ein eventueller Lenkfehler wird dadurch auf einen kleinsten Wert beschränkt.

Bezugszeichen

    1 Hinterrad-Lenksystem

2 Drehfeldmotor
3 Abtriebswelle
4 Kugelumlaufeinrichtung
5 Schubstange
6 Hinterrad
7 Mutter
8 Axiallager
9 -
10 Axiallager
11 Schnecke
12 Kugelreihe
13 erster Schubstangenweg-Sensor
14 Signalleitung
15 zentrale elektronische Steuereinheit
16 Vorderrad-Lenkwinkelsensor
17 Fahrgeschwindigkeitssensor
18 zweiter Sensor
18A Lagegeber
18B Rotorlagegeber
19 -
20 Feststelleinrichtung
21 Steuerleitung
22 Signalleitung
23 Signalleitung
24 Einheit zur Sensorauswertung
25 Signalleitung
26 Signalleitung
27 Signalleitung
28 Einheit für die Lagesteuerung
29 -
30 Einheit für die Motorsteuerlogik
31 Leistungsstufe
32 Leitung
33 Leitung
34 Leitung
35 zweite elektronische Steuereinheit

**Patentansprüche**

1. Einrichtung zum Lenken der Hinterräder (6) von Fahrzeugen mit lenkbaren Vorder- und Hinterrädern,
   - mit einem von einem Elektromotor (2) unterstützten und durch eine Feststelleinrichtung (20) blockierbaren Hinterrad-Lenksystem (1),
   - mit einer zentralen elektronischen Steuereinheit (15) zur Steuerung der Stellung der Hinterräder (6) in Abhängigkeit von der Stellung der Vorderräder,
   - wobei der Steuereinheit (15) wenigstens Signale eines Vorderrad-Lenkwinkelsensors (16), eines Fahrzustandssensors (Fahrgeschwindigkeitssensor 17) und eines Sensors (18) zur Messung der Stellung der Hinterräder (6) zugeführt und dort zur Betätigung des Elektromotors (2) aufbereitet werden und
   - wobei der Sensor (18) einen mit einer Schubstange (5) in Verbindung stehenden Lagegeber (18A) enthält,
dadurch **gekennzeichnet,**
   - daß der Elektromotor ein Drehfeldmotor (2) mit einem Rotorlagegeber (18B) ist,
   - daß der Drehfeldmotor (2) schrittweise durch Ansteuerimpulse für Rechts- bzw. Linksdrehung von der zentralen Steuereinheit (15) gesteuert wird,
   - daß die Bewegung der Schubstange (5) mit Hilfe des Rotorlagegebers (18B) schrittweise an die zentrale Steuereinheit (15) zurückgemeldet und quittiert wird, und
   - daß bei fehlerhafter Rückmeldung (Ausbleiben der Rückmeldesignale oder Auftreten von Rückmeldesignalen ohne Ansteuerimpulse) die Feststelleinrichtung (20) in ihre Blockierstellung geschaltet wird.

2. Lenkeinrichtung nach Anspruch 1, dadurch **gekennzeichnet,** daß bei entsprechendem Fahrzustand, insbesondere bei niedriger Fahrgeschwindigkeit, bei fehlerhaften Rückmeldesignalen von der zentralen Steuereinheit (15) entsprechende Korrektursignale an eine Einheit (30) für die Motorsteuerlogik ausgegeben werden und erst bei Überschreiten einer bestimmten Fehlertoleranz die Feststelleinrichtung (20) in ihre Blockierstellung geschaltet wird.

3. Lenkeinrichtung nach Anspruch 1, dadurch **gekennzeichnet,** daß bei entsprechenden Fahrzustand, insbesondere bei hohen Fahrgeschwindigkeiten, bei fehlerhaften Rückmeldesignalen von der zentralen Steuereinheit (15) die Feststelleinrichtung (20) sofort in ihre Blockierstellung geschaltet wird.

4. Lenkeinrichtung nach Anspruch 2 oder 3, dadurch **gekennzeichnet,** daß ein Freigabesignal von der zentralen Steuereinheit (15) über eine Leitung (34) zu der Einheit (30) für die Motorsteuerlogik vorgesehen ist, durch das nur bei fehlerfreiem Betrieb die Leistungsstufe (31) aktiviert wird, und daß bei fehlendem Freigabesignal die Leistungsstufe (31) abgeschaltet wird.

5. Lenkeinrichtung nach Anspruch 1, dadurch **gekennzeichnet,** daß das Hinterrad-Lenksystem (1) eine von dem Drehfeldmotor (2) angetriebene Mutter (7) enthält, die über eine Kugelumlaufeinrichtung (4) in trieblicher Verbindung mit der Schubstange (5) steht.

6. Lenkeinrichtung nach Anspruch 5, dadurch **gekennzeichnet,** daß die Mutter (7) in axialer Richtung, die Kugelumlaufeinrichtung (4) in axialer und radialer Richtung und die Schubstange (5) in Verdrehrichtung spielfrei eingestellt sind.

**Claims**

1. Device for steering the rear wheels (6) of motor vehicles with steerable front and rear wheels,
   - having a rear wheel steering system (1) supported by an electric motor (2) and lockable by means of a locking device (20),
   - having a central electronic control unit (15) for controlling the position of the rear wheels (6) in dependence upon the position of the front wheels,
   - with at least signals of a front wheel steering angle sensor (16), a driving condition sensor (driving speed sensor 17) and a sensor (18) for measuring the position of the rear wheels (6) being supplied to the control unit (15) and being conditioned there for actuation of the electric motor (2) and
   - with the sensor (18) including a position encoder (18A) connected to a push rod (5),
   characterized in that
   - the electric motor is a synchro motor (2) with a rotor position encoder (18B),
   - the synchro motor (2) is intermittently controlled by the central control unit (15) by means of trigger pulses for right-hand or left-hand rotation,
   - the movement of the push rod (5) is, with the aid of the rotor position encoder (18B), intermittently fed back to the central control unit (15) and acknowledged, and
   - in the event of faulty checkback (absence of check-back signals or occurrence of check-back signals without trigger pulses) the locking device (20) is switched into its locking position.

2. Steering device according to claim 1, characterized in that, in an appropriate driving condition, in particular at a low driving speed, in the event of faulty check-back signals appropriate correction signals are output by the central control unit (15) to a unit (30) for the motor control logic and the locking device (20) only switches into its locking position when a specific fault tolerance has been exceeded.

3. Steering device according to claim 1, characterized in that, in an appropriate driving condition, in particular at high driving speeds, in the event of faulty check-back signals the locking device (20) is immediately switched by the central control unit (15) into its locking position.

4. Steering device according to claim 2 or 3, characterized in that an enabling signal is supplied from the central control unit (15) via a line (34) to the unit (30) for the motor control logic, said enabling signal activating the power output element (31) only in the event of fault-free operation, and that in the absence of an enabling signal the power output element (31) is switched off.

5. Steering device according to claim 1, characterized in that the rear wheel steering system (1) includes a nut (7), which is driven by the synchro motor (2) and is drive-connected by a recirculating ball device (4) to the push rod (5).

6. Steering device according to claim 5, characterized in that the nut (7) is adjusted without play in an axial direction, the recirculating ball device (4) is adjusted without play in an axial and radial direction and the push rod (5) is adjusted without play in direction of rotation.

**Revendications**

1. Dispositif pour diriger les roues arrière (6) de véhicules à roues avant et arrière directrices,
   - comportant une servodirection arrière (1) assistée par un moteur électrique (2) et susceptible d'être bloquée par un dispositif de blocage (20),
   - et comportant une unité centrale électronique de commande (15) pour commander la position des roues arrière (6) en fonction de la position des roues avant,
   - où l'unité de commande (15) reçoit au moins des signaux d'un capteur d'angle de braquage des roues avant (16), d'un capteur d'état de marche (capteur de vitesse de marche 17) et d'un capteur (18) pour mesurer la position des roues arrière (6) et traite ces signaux pour commander le moteur électrique (2), et
   - où ledit capteur (18) comporte un détecteur de position (18A) associé à une barre de poussée (5),
   **caractérisé**
   - en ce que le moteur électrique (2) est un moteur à champ tournant pourvu d'un détecteur de position du rotor (18B),
   - en ce que le moteur à champ tournant (2) est commandé pas à pas par l'unité centrale de commande (15) au moyen d'impulsions de braquage pour sa rotation à droite ou à gauche,
   - en ce que le déplacement de la barre de poussée (5) fait l'objet d'une réponse pas à pas à l'unité centrale de commande (15) à l'aide du détecteur de position du rotor (18B) et fait l'objet d'une quittance, et

- en ce qu'en cas de réponse erronée (absence des signaux de réponse ou présence de signaux de réponse sans impulsions de braquage), le dispositif de blocage (20) est mis dans sa position de blocage.

2. Dispositif selon la revendication 1, **caractérisé** en ce que dans un état de marche déterminé, notamment à basse vitesse, en cas de signaux de réponse erronés, l'unité centrale de commande (15) délivre des signaux correspondants de correction à une unité (30) de logique de commande du moteur et le dispositif de blocage (20) n'est mis en position de blocage qu'en cas de dépassement d'une tolérance d'erreur déterminée.

3. Dispositif selon la revendication 1, **caractérisé** en ce que dans un état de marche déterminé, notamment à vitesse élevée, en cas de signaux de réponse erronés, le dispositif de blocage (20) est mis immédiatement en position. de blocage par l'unité centrale de commande (15).

4. Dispositif selon la revendication 2 ou 3, **caractérisé** en ce qu'il est prévu un signal de libération délivré par l'unité centrale de commande (15) sur une ligne (34) allant à l'unité (30) de logique de commande du moteur, grâce auquel l'étage de puissance (31) n'est activé qu'en cas de fonctionnement non erroné, et en ce que l'étage de puissance (31) est déclenché en l'absence du signal de libération.

5. Dispositif selon la revendication 1, **caractérisé** en ce que la servodirection arrière (1) comporte un écrou (7) entraîné par le moteur à champ tournant (2) et relié à la barre de poussée (5) par un mécanisme à circuit de billes (4).

6. Dispositif selon la revendication 5, **caractérisé** par un montage sans jeu de l'écrou (7) en direction axiale, du mécanisme à circuit de billes (4) en direction axiale et radiale, et de la barre de poussée (5) en regard de la rotation.

FIG.1

FIG.2